# EUROPÄISCHE PATENTANMELDUNG

(11) **EP 1 099 740 A1**
(43) Veröffentlichungstag der Anmeldung: **16.05.2001**
(21) Anmeldenummer: 99811026.6
(22) Anmeldetag: 09.11.1999
(51) Int. Cl.: C09J 121/02, C09J 111/02, C08K 3/38, C08K 5/17, C08K 5/09

(54) **Aufsprühbare Dispersion und Verfahren zum elastischen Verkleben zweier Substratflächen**

(71) Anmelder: ALFA KLEBSTOFFE AG, 8454 Buchberg (CH)
(72) Erfinder: Simmler, Thomas, 8454 Buchberg (CH); Simmler, Emil, 8454 Buchberg (CH)
(74) Vertreter: Patentanwälte Breiter + Wiedmer AG

(57) **Zusammenfassung**

In eine aufsprühbare Dispersion auf der Basis eines kolloidalen Chloroprenpolymerisats und/oder Latex' und/oder Kautschuks ist wenigstens eine Zusatzkomponente der Gruppe bestehend aus Borsäure, einer Aminosäure und einer Carbonsäure mit höchstens je sechs C-Atomen eingemischt, vorzugsweise mit je 0,01 bis 10 Gew.-% in bezug auf den Feststoffgehalt.

Das Sprühgut wird auf wenigstens eine oder beide der Substratflächen aufgetragen, die zu verklebenden Substratflächen nass aufeinander gelegt und während wenigstens etwa 0,5 sec mit wenigstens 0,1 N/cm² angedrückt.

Die sprühbare Dispersion wird vorzugsweise zum Verkleben von Schaumstoffen eingesetzt, nach kurzem Andrücken ist die Initialhaftung so hoch, dass sofort mit einer Weiterverarbeitung oder mit einem Transport begonnen werden kann. Besonders vorteilhaft ist das direkte Verkleben eines Schaumstoffs mit Holz.

## Beschreibung

Die Erfindung bezieht sich auf eine aufsprühbare Dispersion auf der Basis eines kolloidalen Chloroprenpolymerisats und/oder Latex' und oder Kautschuks. Weiter betrifft die Erfindung ein Verfahren zum elastischen Verkleben zweier Substratflächen, wovon wenigstens eine porös ausgebildet ist, mit dieser Dispersion und eine Verwendung der Dispersion.

Werden zwei Substratflächen mit einem Kleber beschichtet und nach dem Trocknen des Klebers zusammengedrückt, spricht man von einem Kontaktkleber. Dieser kann also seine Wirkung erst entfalten, wenn das Wasser verdunstet ist. Wird lediglich eine der beiden zu verbindenden Substratflächen mit einem Kleber beschichtet und die andere Substratfläche nach dem Verdunsten des Wassers aufgedrückt, handelt es sich um einen Haftkleber. Der Feststoffgehalt bekannter Kleber liegt in der Regel lediglich bei 10 bis 25 Gew.-%, der Wassergehalt überwiegt also bei weitem.

In leicht flüchtigen organischen Lösungsmitteln gelöste Kontaktkleber sind rasch verarbeitbar. Dieser Vorteil wird jedoch durch eine Reihe von Nachteilen weitgehend oder sogar überwiegend aufgehoben. Die beim Spritzen und Trocknen entweichenden organischen Lösungsmittel stellen einen bedeutend arbeitsökonomischen Verlust dar. Weiter sind die sich verflüchtigenden Lösungsmittel feuergefährlich, gesundheitsschädigend und/oder umweltbelastend. Deshalb müssen stets besondere Anlagen gebaut und Vorkehrungen getroffen werden, um das unkontrollierte Entweichen von Lösungsmitteln zu verhindern oder zumindest zu vermindern.

Aus der EP,A1 0470928 ist ein Verfahren zum elastischen Verkleben zweier Substratflächen bekannt. Von diesen ist wenigstens eine porös ausgebildet. Eine kautschukhaltige erste Dispersion mit einem Acrylsäureestercopolymer und eine kolloidale zweite Dispersion eines Chloroprenpolymerisats werden nach vorheriger oder mit gleichzeitiger Durchmischung auf wenigstens eine der Substratflächen aufgetragen. Die zu verklebenden Substratflächen werden, unmittelbar darauf oder später, mit nassen Klebstoffdispersionen aufeinandergelegt und angedrückt. Die beiden Substratflächen haften mit hoher Initialkraft, auch bei Raumtemperatur und erreichen eine hohe Endkraft. Es sind keinerlei organische Lösungsmittel notwendig, welche in die Umwelt gelangen und/oder entsorgt werden müssten. Das Anwendungsspektrum ist breit, liegt jedoch insbesondere beim Verkleben von Schaumstoffen.

Weiter ist aus der EP,A1 0624634 eine aufsprühbare, borsäurehaltige Dispersion auf der Basis eines Acrylsäureestercopolymers und eines kolloidalen Chloroprenpolymerisats zum elastischen Verkleben zweier Substratflächen bekannt. Die Dispersion wird auf wenigstens eine der Substratflächen aufgetragen. Die zu verklebenden Substratflächen werden nass aufeinandergelegt und kurz angedrückt, wobei eine hohe Initialhaftung resultiert. Jede der drei Komponenten Acrylsäureestercopolymer, Chloroprenpolymerisat und Borsäure ist von erfindungswesentlicher Bedeutung.

Der Erfindung liegt die Aufgabe zugrunde, eine aufsprühbare Dispersion und ein Verfahren zum elastischen Verkleben zweier Substratflächen mit einer Dispersion der eingangs genannten Art zu schaffen, welche die Initialhaftkraft von nass aufeinandergelegten Substratflächen vereinfacht, eine hohe Endhaftkraft und insbesondere eine lange Verarbeitungszeit nach dem Auftragen der Dispersion gewährleistet, ohne die ökologischen und ökonomischen Vorteile einzubüssen. Insbesondere soll das Kleben von Schaumstoff auf harte Unterlagen vereinfacht und verbessert werden.

In bezug auf die aufsprühbare Dispersion wird die Aufgabe erfindungsgemäss dadurch gelöst, dass sie wenigstens eine Zusatzkomponente der Gruppe bestehend aus Borsäure, einer Aminosäure und einer Carbonsäure mit höchstens je sechs C-Atomen enthält, welche in die Dispersion eingemischt ist/sind. Spezielle und weiterführende Ausführungsformen der Erfindung sind Gegenstand von abhängigen Patentansprüchen.

Die aufsprühbaren Dispersionen können als Kontakt- oder Einseitkleber eingesetzt werden. Eine hohe, mit derjenigen von lösungsmittelhaltigen Klebstoffen absolut vergleichbare Initialhaftkraft kann bereits in Sekundenschnelle nach dem Auftragen erreicht werden, wenn die beiden Substratflächen nass aufeinandergelegt und kurz aneinandergedrückt werden. Eine ähnlich hohe, während längerer Zeit noch höhere Initialhaftkraft wird erreicht, wenn die aufgetragene Dispersion vorerst abgelüftet, und dann die Substratflächen nass aufeinander gelegt werden. Somit ergibt sich eine offene Zeit des Klebstoffes von mehreren Minuten, was eine rationelle Verarbeitung und Arbeitsweise erlaubt und unterstützt.

Die Klebstoffdispersionen sind drucksensibel. Sofort nach dem Andrücken wird auch der eigentliche Abbindevorgang eingeleitet, ohne dass Wasser abgegeben wird. Dies ist von grosser praktischer Bedeutung, weil mit Dispersion beschichtete, nasse Oberflächen aufeinandergedrückt werden können und sofort die für eine Weiterverarbeitung und/oder einen Transport notwendige Initialhaftkraft erreichen. Diese steigt auch nach der Verarbeitung rasch weiter an und erreicht z.B. auch bei einem Schaum mittlerer Härte bald die Ausreissgrenze.

Die Dispersionen werden in einem Mischer üblicher Bauart hergestellt. Eine fertig gemischte Dispersion kann unter Luftabschluss mehrere Monate aufbewahrt werden, ohne sich zu verändern, Schaden zu nehmen oder zu koagulieren.

Das Chloroprenpolymerisat kann kleinere Mengen anderer Monomere als Chloropren enthalten, vorzugsweise andere Diene. Insgesamt beträgt jedoch die Menge der zugesetzten anderen Monomere bevorzugt höchstens 30 Gew.-%, bezogen auf das Chloroprenpolymerisat. Die mittlere Teilchengrösse des Chloroprenpolymerisats liegt vorzugsweise im submikronen Bereich, insbesondere etwa 0,1 µm bis 0,2 µm.

Latex liegt in natürlicher, nicht vulkanisierter oder vulkanisierter Form, im letzteren Fall als Kautschuk bezeichnet, vor.

Wässrige Dispersionen gemäss der vorliegenden Erfindung haben zweckmässig einen Feststoffgehalt von je 40 bis 70 Gew.-%, insbesondere 45 bis 65 Gew.-%.

Die erfindungswesentliche Zugabe wenigstens einer Zusatzkomponente in die Dispersion erfolgt in der Regel in einer Menge von je 0,01 bis 10 Gew.-%, bezogen auf den Feststoffgehalt.

Als Zusatzkomponenten können neben der anorganischen Borsäure H₃BO₃ folgende organische Verbindungen mit höchstens je 6 C-Atomen eingesetzt werden:
- die neutrale Aminosäure Glycin CH₂ (NH₂) COOH und/oder
- wenigstens eine Dicarbon- oder Tricarbonsäure, z.B. Citronensäure (HOOCCH₂-)₂ COHCOOH und Weinsäure HOOCCHOHCHOHCOOH.

Diese Zusatzkomponenten werden vorzugsweise in einer Menge von 0,05 bis 2 Gew.-%, insbesondere 0,1 bis 0,3 Gew.-%, zugegeben, wie immer bezogen auf den Feststoffgehalt.

Durch die Zugabe von Borsäure kann, wie bei allen Zusatzkomponenten, die Initialhaftkraft der aufsprühbaren Dispersion drastisch verbessert werden, auch bei längerer Ablüftzeit.

Natriumlaurylsulfat als Hilfsstoff kann vorzugsweise in einer Konzentration von 0,01 bis 3 Gew.-% zugegeben werden, wiederum bezogen auf den Feststoffgehalt. Dadurch werden zudem beim bevorzugten Aufsprühen die mechanischen Eigenschaften, insbesondere die Bearbeitbarkeit, verbessert.

Als weiterer Hilfsstoff kann Diisobutylphtalat, ein Weichmacher, vorzugsweise in einer Menge bis etwa 3 Gew.-% zugegeben werden.

Schliesslich können organische und/oder anorganische Hilfsstoffe zugegeben werden, welche erwünschte Eigenschaften der Dispersion spezifisch fördern:
N-Alkylpyrrolidon, beispielsweise in Form von N-Methyl-2-Pyrrolidon bis zu 15 Gew.-%, bezogen auf den Feststoffgehalt, und/oder
N-Octyl-2-Pyrrolidon oder N-Dodecyl-2-Pyrrolidon, jeweils bis zu 10 Gew.-%, wiederum bezogen auf den Feststoffgehalt.
N-Methyl-2-Pyrrolidon kann auch mit N-Octyl-2-Pyrrolidon oder N-Dodecyl-2-Pyrrolidon, bei unveränderten Gewichtsanteilen, gemischt sein. N-Methyl-2-Pyrrolidon dient als Weichmacher, die beiden anderen Pyrrolidone fördern eher die Koagulationsfähigkeit und Benetzung.

Mit dem Ziel des Weichmachens, der Haftvermittlung, der Wärmestandfähigkeit und der Lagerstabilität kann als weitere Komponenten zur Borsäure auch Dimetylphtalat oder Diisobutylphtalat eingemischt sein, vorzugsweise mit je bis zu 20 Gew.-%, wiederum bezogen auf den Feststoffgehalt.

Wie oben bereits angedeutet, können auch feinkörnige Füllmaterialien eingemischt sein, vorzugsweise ZnO, MgO und/oder Farbpigmente.

Für eine allfällige Einstellung von pH-Werten und die Zugabe von Hilfsstoffen wird ausserdem auf die EP,A1 0470928, Seite 4, Zeilen 22 bis 33, verwiesen.

In bezug auf das Verfahren wird die Aufgabe erfindungsgemäss dadurch gelöst, dass die Dispersion auf wenigstens eine der Substratflächen aufgetragen, die zu verklebenden Substratflächen nass aufeinandergelegt und während wenigstens etwa 0,5 sec mit wenigstens 0,1 N/cm² angedrückt werden.

Bevorzugt wird das Sprühgut mit einem Luftdruck von 0,5 bis 1,5 bar und einem Materialdruck von 0,3 bis 0,6 bar aufgetragen. Auch das Freifliessverfahren, welches in der US,A 5868319 beschrieben ist, eignet sich besonders gut zum Auftragen des Sprühguts. Weiter kann das Sprühgut durch Aufwalzen, Aufstreichen oder Aufgiessen aufgetragen werden.

Das Sprühgut wird vorzugsweise mit einer spezifischen Menge von 30 bis 300 g/m², insbesondere 50 bis 150 g/m², aufgetragen. Das Aufsprühen erfolgt vorzugsweise bei Raumtemperatur, die Initialhaftkraft greift derart rasch und stark, dass sich eine Erwärmung in der Praxis normalerweise erübrigt.

Die zu verklebenden nassen Substratflächen können sofort nach dem Beschichten oder bis 60 min, vorzugsweise bis 30 min später aufeinandergedrückt werden, ohne dass die Initialhaftkraft wesentlich verändert wird.

Das Andrücken erfolgt zweckmässig während 1 bis 5 sec, vorzugsweise mit 0,1 bis 1 N/cm², insbesondere mit etwa 0,5 N/cm². Das Andrücken kann mehrmals erfolgen, mit vollständiger oder Teilentlastung. Durch Wiederholungen, auch durch Erhöhen des Anpressdruckes kann die Initialhaftung und die Zunahme der Haftung erhöht werden, was nicht immer erwünscht ist. Wesentlich ist die sofortige Bearbeitbarkeit und das Aufrechterhalten der Initialhaftkraft bei längerer Ablüftzeit.

Eine besonders vorteilhafte Anwendung der erfindungsgemässen sprühbaren Dispersion liegt im Verkleben von Schaumstoffen. Ein häufiger Arbeitsgang besteht hier darin, dass quaderförmige Schaumstoffblöcke zu Kissen verklebt werden, indem die schmalen Seitenflächen eingeknickt und nach dem Auftragen eines erfindungsgemässen Klebers sofort nass aufeinandergedrückt werden können. Dank der hohen Initialhaftkraft kann der angelegte Pressdruck sofort wieder weggelassen werden. Ein Zurückfedern oder Verschieben des gespannten Schaumstoffs konnte nie festgestellt werden, auch bei Ablüftzeiten bis zu einer halben Stunde.

Schaumstoffe aller Art, beispielsweise aus Polyäthylen, Polyäther, Polyurethan oder Naturlatex, haben ein breites Verwendungspektrum in der Polstermöbelindustrie, für Sportartikel usw. Eine besonders wertvolle Anwendung liegt im Überziehen von geformten Schaumstoffen mit einem textilen Überzug, beispielsweise mit einem Gewebe überzogene Fahrzeugsitze.

In der Polsterindustrie kann nun dank der Erfindung Schaumstoff direkt, einfach und dauerhaft auf Holz geklebt und so insbesondere Sitzmöbel hergestellt werden.

Die wichtigsten Vorteile der vorliegenden Erfindung können wie folgt zusammengefasst werden:
- Ausserordentlich hohe und schnelle Initialhaftkraft von nassen Dispersionen, auch bei Raumtemperatur und längerer Ablüftung.
- Keine organischen Lösungsmittel oder Lösungsmittelkomponenten, welche Arbeitsplatz und Umwelt belasten, nebelarmer Sprühauftrag, deshalb keine Probleme mit strengen arbeitsplatzhygienischen und feuerpolizeilichen Vorschriften oder Abwasserverordnungen. Weiter werden die Arbeitsbedingungen des Verarbeiters verbessert.
- Breites Anwendungsspektrum, insbesondere auch Verkleben von Schaumstoff und Holz.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: die Anfangshaftung F der Klebstofftype SIMALFA® 330 in Abhängigkeit der Ablüftzeit, und
- - Fig. 2: den Verlauf der Abbindung der Klebstofftype SIMALFA® 330 in Abhängigkeit der Ablüftzeit.

Für die Versuche ist jeweils ein quaderförmig ausgebildeter Schaum mittlerer Härte mit einer Klebefläche von 3 x 3 cm eingesetzt worden. Bei allen Varianten werden die Dispersionen bei Raumtemperatur aufgetragen. Alle hier verwendeten Klebstofftypen SIMALFA® 330 der Firma Alfa Klebstoffe AG, CH-8454 Buchberg, enthalten neben einem kolloidalen Chloroprenpolymerisat 0.1 bis 2 Gew.-% Borsäure.

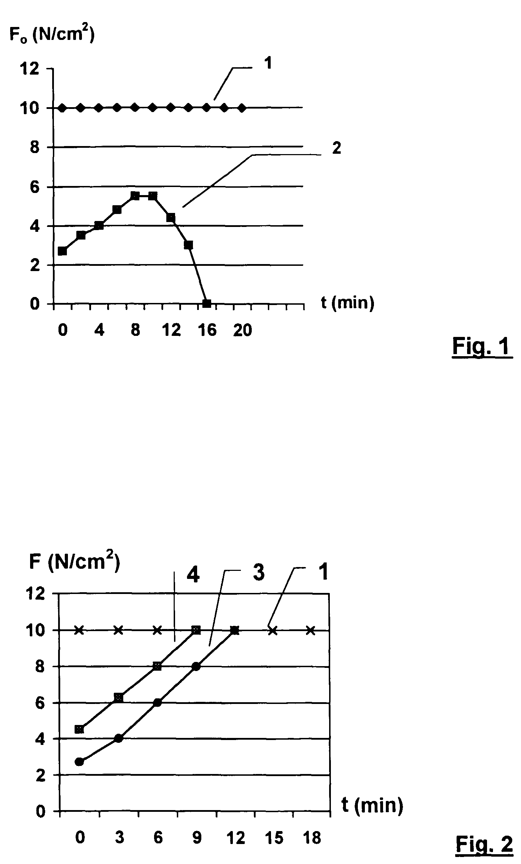

In Fig. 1 ist auf der Ordinate die Anfangshaftung Fₒ in N/cm² in Funktion der Ablüftzeit t in Minuten aufgetragen, die Raumtemperatur lag bei etwa 15°C, die beiden Klebeflächen wurden während 5 sec mit einem Anpressdruck von 0,5 N/cm² aneinander gepresst. Der Dispersionskleber wurde mit etwa 90 g/m² aufgetragen.

Die parallel zur Zeitabszisse verlaufende Kurve 1 zeigt eine Schaumausrissgrenze von etwa 10 N/cm².

Kurve 2 zeigt den Verlauf der Anfangshaftung Fₒ des erfindungsgemässen Dispersionsklebers. Die unmittelbar nach dem Anpressen gemessene Anfangshaftung Fₒ liegt bei etwa 2,7 N/cm². Werden die mit dem Dispersionskleber beschichteten Substratflächen nach verschiedenen Ablüftzeiten bis 18 min zusammengelegt und aufeinandergedrückt, steigt die Anfangshaftung bis etwas über 5 N/cm², sinkt jedoch bei längeren Ablüftzeiten wegen Überschreiten der offenen Zeit verhältnismässig stark ab. Nach etwa 17 min Ablüftzeit t besteht nach dem Zusammendrücken keine Anfangshaftung Fₒ mehr.

Der Klarheit wegen wird hier nochmals betont, dass die Kurve 2 von Fig. 1 die Anfangshaftung Fₒ, unmittelbar nach dem Anpressen während 5 sec gemessen, zeigt. Der zeitliche Verlauf der Abbindung geht aus Fig. 1 nicht hervor.

Würde ein Schaum geringer Härte, z.B. ein Polyuretanschaum einer Dichte von 30 - 40 kg/m³ mit einer Schaumausrissgrenze von etwa 5 N/cm², eingesetzt, würden die höchsten Werte für die Anfangshaftung der Kurve 2 in Fig. 1 gerade genügen, den Schaum auszureissen.

In Fig. 2 ist der Ablauf der Abbindung des erfindungsgemässen Dispersionskleber dargestellt. Die Raumtemperatur lag bei 17°C, Pressdruck und Anpresszeiten entsprachen Fig. 1. Der Dispersionskleber wurde ebenfalls mit etwa 90 g/m² aufgetragen. Die mittlere Härte des eingesetzten Schaumes, entsprechend der die Schaumausrissgrenze zeigende Kurve 1, liegt wie in Fig. 1 bei etwa bei 10 N/cm². Gemäss Fig. 2, Kurve 3, werden zwei Substratflächen sofort nach dem Auftragen des Klebers aufeinander gelegt und während 5 sec mit einem Pressdruck von 0,5 N/cm² zusammengepresst. Unmittelbar darauf liegt die Anfangshaftung Fₒ bei knapp unter 3 N/cm². Im Abstand von jeweils 3 min wird das Haftvermögen F einer Probe geprüft. Dieses steigt an und erreicht nach etwa 12 min die Schaumausrissgrenze.

Zur Ermittlung von Kurve 4 von Fig. 2 wird in ähnlicher Weise verfahren. Die nassen Substratflächen werden jedoch erst nach einer Ablüftung von 5 min aufeinander gedrückt. Das Haftvermögen F steigt von der Anfangshaftung Fₒ von etwa 4,5 N/cm² schon nach etwa 9 min bis zur Schaumausrissgrenze an.

Bei einem Schaum von geringerer Härte bzw. Reissdehnung, beispielsweise beim oben diskutierten Polyuretanschaum, würde das Haftvermögen des Klebstoffes bereits früher ausreichen, um den Schaumausriss herbeizuführen. Dieser Wert ist jedoch nicht von besonderer Bedeutung, viel wichtiger ist die für eine sofortige Weiterverarbeitung hinreichende Anfangshaftung Fₒ.

Schliesslich wäre noch der Kurvenverlauf eines allgemein üblichen Dispersionsklebers zu erwähnen, welcher eine Anfangshaftung von praktisch Null zeigt und langsam ansteigt. Selbst die niedrigsten erfindungsgemässen Werte für die Anfangshaftung werden von solchen Dispersionsklebern erst nach etwa einer Stunde erreicht, also weit ausserhalb des eingezeichneten Bereichs. Damit entfällt die Möglichkeit einer sofortigen Weiterverarbeitung oder einem Transport nach dem Zusammendrücken, der Dispersionskleber greift erst nach etwa einer Stunde in verarbeitungstechnisch notwendigem Umfang.

## Patentansprüche

1. Aufsprühbare Dispersion auf der Basis eines kolloidalen Chloroprenpolymerisats und/oder Latex' und/oder Kautschuks,
dadurch gekennzeichnet, dass
sie wenigstens eine Zusatzkomponente der Gruppe bestehend aus Borsäure, einer Aminosäure und einer Carbonsäure mit höchstens je sechs C-Atomen enthält, welche in die Dispersion eingemischt ist/sind.

2. Dispersion nach Anspruch 1, dadurch gekennzeichnet, dass die Zusatzkomponente/n in bezug auf den Feststoffgehalt einen Anteil von je 0,01 bis 10 Gew.-%, hat/haben.

3. Dispersion nach Anspruch 2, dadurch gekennzeichnet, dass die Zusatzkomponente/n einen Säureanteil von 0,05 bis 2 Gew.-%, vorzugsweise 0,1 bis 0,3 Gew.-%, hat/haben.

4. Dispersion nach einem der Ansprüche 1 bis 3, dadurch gekennzeichnet, dass sie Glycin, Citronensäure und/oder Weinsäure enthält.

5. Dispersion nach einem der Ansprüche 1 bis 4, dadurch gekennzeichnet, dass sie einen Natriumlaurylsulfatanteil von 0,01 bis 3 Gew.-%, hat.

6. Dispersion nach einem der Ansprüche 1 bis 5, dadurch gekennzeichnet, dass sie ein N-Alkylpyrrolidon, vorzugsweise bis zu etwa 3 Gew.-% N-Methyl-2-Pyrrolidon, und/oder eine Substanz der Gruppe bestehend aus N-Octyl-2-Pyrrolidon und N-Dodecyl-2-Pyrrolidon enthält, vorzugsweise jeweils bis zu etwa 3 Gew.-%, immer bezogen auf den Feststoffgehalt.

7. Dispersion nach einem der Ansprüche 1 bis 6, dadurch gekennzeichnet, dass sie einen Weichmacher, insbesondere Diisbutylphtalat enthält, vorzugsweise mit einen Anteil bis etwa 3% Gew.-%, bezogen auf den Feststoffgehalt.

8. Verfahren zum elastischen Verkleben zweier Substratflächen, wovon wenigstens eine porös ausgebildet ist, mit einer Dispersion nach einem der Ansprüche 1 bis 7,
dadurch gekennzeichnet, dass
die Dispersion auf wenigstens eine der Substratflächen aufgetragen, die zu verklebenden Substratflächen nass aufeinandergelegt und während wenigstens etwa 0,5 sec mit wenigstens 0,1 N/cm² angedrückt werden.

9. Verfahren nach Anspruch 8, dadurch gekennzeichnet, dass die Dispersion aufgespritzt oder aufgesprüht wird, vorzugsweise mit einem Luftdruck von 0,5 bis 1,5 bar und einem Materialdruck von 0,3 bis 0,6 bar.

10. Verfahren nach Anspruch 8 oder 9, dadurch gekennzeichnet, dass die aufgetragene Dispersion vor dem Aufeinanderlegen und Anpressen 0 bis 60 min, vorzugsweise während 0 bis 30 min, abgelüftet wird.

11. Verfahren nach einem der Ansprüche 8 bis 10, dadurch gekennzeichnet, dass die zu verklebenden, nassen Substratflächen wenigstens einmal während 1 bis 5 sec angedrückt werden, vorzugsweise mit 0,2 bis 1 N/cm².

12. Verwendung der Dispersion nach einem der Ansprüche 1 bis 7 zum direkten Kleben von Schaumstoff auf eine Holzunterlage.
